# FASCICULE DE BREVET EUROPEEN

(11) **EP 4 483 039 B1**
(45) Date de publication et mention de la délivrance du brevet: **14.01.2026**
(21) Numéro de dépôt: 23708530.3
(22) Date de dépôt: 20.02.2023
(51) Int. Cl.: F01D 5/08, F01D 9/06, F01D 25/12, F01D 25/16, F02C 7/12, F02K 3/06

(54) **TURBOMACHINE POUR AÉRONEF**
TURBINENTRIEBWERK FÜR EIN FLUGZEUG
TURBINE ENGINE FOR AN AIRCRAFT

(30) Priorité: 22.02.2022 FR 2201543
(43) Date de publication de la demande: 01.01.2025
(73) Titulaire: SAFRAN AIRCRAFT ENGINES, 75015 Paris (FR)
(72) Inventeur: VARENNE, Victor Henri Marius, 77550 MOISSY-CRAMAYEL (FR); BAUDRAN, Arnaud, 77550 MOISSY-CRAMAYEL (FR); BEAUJARD, Antoine Jean-Philippe, 77550 MOISSY-CRAMAYEL (FR); LE CAIR, David René Pierre, 77550 MOISSY-CRAMAYEL (FR)
(74) Mandataire: Ernest Gutmann - Yves Plasseraud S.A.S.
(86) Numéro de dépôt international: PCT/FR2023/050240
(87) Numéro de publication internationale: WO 2023/161582

(56) Documents cités:
- CA-A1- 2 940 708
- FR-A1- 3 097 907
- US-A1- 2015 345 400

## Description

### Domaine de la divulgation

La présente divulgation concerne une turbomachine pour aéronef et plus particulièrement le refroidissement de la turbomachine.

### Etat de la technique

Il est connu une turbomachine pour aéronef dans laquelle la turbomachine est destinée à propulser, vers un côté aval, un flux d'air entrant d'un côté amont et ainsi faire avancer l'aéronef.

Les documents FR 2 858 649 A1, FR 3 097 907 A1 et US 2015/345400 A1 décrivent une telle turbomachine.

La turbomachine présente une veine annulaire primaire et un canal flux froid s'étendant autour de la veine annulaire primaire, ladite turbomachine comprenant :
une roue agencée en amont d'une première paroi annulaire, la première paroi annulaire séparant la veine annulaire primaire du canal flux froid,
dans la veine annulaire primaire, d'amont en aval un compresseur, une chambre de combustion, une première turbine et une deuxième turbine, le compresseur présentant un étage d'entrée et un étage de sortie, la première turbine comportant un premier rotor de turbine et la deuxième turbine comportant un deuxième rotor de turbine,
un ensemble d'arbre destiné à entrainer en rotation le compresseur et la roue autour d'un axe de rotation, l'ensemble d'arbre comprenant un premier arbre de liaison et un deuxième arbre de liaison, le premier arbre de liaison étant lié en rotation au deuxième rotor de turbine, le deuxième arbre de liaison étant lié en rotation au premier rotor de turbine,
un stator inter-turbine disposé entre la première turbine et la deuxième turbine, le stator inter-turbine comprenant une pluralité de bras s'étendant entre une extrémité interne et une extrémité externe, la pluralité de bras traversant la veine annulaire primaire.

Il faut comprendre par "canal flux froid" un canal, notamment une veine annulaire, qui ne se trouve pas en aval d'une chambre de combustion.

La température dans la veine annulaire primaire en aval de la chambre de combustion est élevée. Le refroidissement de la turbomachine nécessite de prélever une partie de l'air dans la turbomachine et de le faire passer au contact d'éléments mécaniques à refroidir. Lorsque l'air de refroidissement est libéré, sa pression est plus faible que lorsqu'il est prélevé. La quantité d'air servant au refroidissement doit donc être maitrisée pour ne pas pénaliser le rendement de la turbomachine.

Afin d'augmenter la robustesse et réduire le coût de fabrication (par l'utilisation de matériau ayant de moindres exigences de résistance thermique) et la consommation en carburant de la turbomachine, la présente divulgation vise à améliorer le refroidissement de la turbomachine.

### Exposé de la divulgation

Pour remédier aux problèmes précités, conformément à la divulgation, le deuxième arbre de liaison entraine en rotation le compresseur et la turbomachine comporte un ensemble de refroidissement, l'ensemble de refroidissement comprenant un premier circuit de refroidissement présentant successivement :
une première entrée de refroidissement située entre la roue et le compresseur,
un premier passage s'étendant à travers la veine annulaire primaire, dans le stator inter-turbine, de l'extrémité interne vers l'extrémité externe, et
une première sortie de refroidissement s'étendant dans le canal flux froid.

Le refroidissement nécessite de faire des compromis entre la pression et la température de l'air destiné au refroidissement. Plus l'air est prélevé en amont dans la veine annulaire primaire, plus sa température est basse, mais également sa pression. En fonction des conditions de fonctionnement de la turbomachine, la première entrée de refroidissement étant située en amont du compresseur, la pression au niveau de la première sortie de refroidissement peut être supérieure à l'extérieur du circuit de refroidissement qu'à l'intérieur du circuit de refroidissement. Il est par conséquent possible que, temporairement, le premier circuit de refroidissement ne remplisse pas sa fonction de refroidissement. Toutefois, en cas d'inversion du sens d'écoulement dans le premier circuit de refroidissement, la température dans le canal flux froid étant sensiblement inférieure à la température dans la veine annulaire primaire en aval de la chambre de combustion et relativement proche de la température au niveau de la première entrée de refroidissement, une telle situation est acceptable.

En outre, le premier passage permet de refroidir le stator inter-turbine.

De préférence, le premier circuit comprend, entre la première entrée de refroidissement et le premier passage, un premier espace de refroidissement s'étendant au contact du deuxième arbre de liaison.

Ainsi, on réduit le risque que le deuxième arbre de liaison soit soumis à une température élevée risquant de l'endommager, lorsque la pression en aval (à l'extérieur) de la première sortie de refroidissement est supérieure à la pression à l'intérieur du circuit de refroidissement.

Selon une caractéristique complémentaire, l'espace de refroidissement s'étend de préférence entre le premier arbre de liaison et le deuxième arbre de liaison.

Ainsi, on réduit également le risque que le premier arbre de liaison soit soumis à une température élevée risquant de l'endommager, lorsque la pression en aval (à l'extérieur) de la première sortie de refroidissement est supérieure à la pression à l'intérieur du circuit de refroidissement.

Selon une autre caractéristique conforme à la divulgation, de préférence l'ensemble de refroidissement comporte en outre un deuxième circuit de refroidissement, le premier circuit de refroidissement et le deuxième circuit de refroidissement sont distincts, le premier circuit de refroidissement étant fluidiquement étanche par rapport au deuxième circuit de refroidissement, le deuxième circuit de refroidissement comprend successivement :
une deuxième entrée de refroidissement située en aval de l'étage d'entrée du compresseur,
un deuxième passage s'étendant à travers la veine annulaire primaire, dans le stator inter-turbine, de l'extrémité externe vers l'extrémité interne,
une deuxième sortie de refroidissement s'étendant dans la veine annulaire primaire, en aval de la première turbine.

Ainsi, le deuxième circuit de refroidissement possède ses propres caractéristiques de pression, permet de refroidir d'autres éléments de la turbomachine sans dégrader le refroidissement procuré par le premier circuit de refroidissement.

De préférence, le deuxième circuit de refroidissement comprend un deuxième espace de refroidissement s'étendant au contact du deuxième rotor de turbine pour le refroidir.

La turbine haute pression étant à très haute température, le refroidissement de la turbine haute pression tend à amener l'air qui a refroidi la turbine haute pression à une température risquant d'être préjudiciable pour le refroidissement au niveau du premier arbre de liaison et du deuxième arbre de liaison et/ou à une pression risquant d'être supérieure à la pression à la première entrée de refroidissement. En maintenant le premier circuit de refroidissement et le deuxième circuit de refroidissement physiquement distincts (en ne mélangeant pas l'air du premier circuit de refroidissement et l'air du deuxième circuit de refroidissement), mais en créant un échange de chaleur, on améliore l'efficacité du deuxième circuit de refroidissement, tout en évitant un risque d'inversion du sens du flux dans le premier circuit de refroidissement.

Selon une caractéristique complémentaire conforme à la présente divulgation, de préférence chaque bras présente un espace interne, le stator inter-turbine comprend une canalisation s'étendant dans l'espace interne et, l'un parmi le premier circuit et le deuxième circuit s'étend à l'intérieur de la canalisation, l'autre parmi le premier circuit et le deuxième circuit s'étend à l'extérieur de la canalisation et au contact de la canalisation, de sorte que la canalisation fait office d'échangeur de chaleur.

Ainsi, l'air circulant dans le premier circuit de refroidissement, avant d'être évacué (dans le canal flux froid) refroidit l'air circulant dans le deuxième circuit de refroidissement, sans que la pression dans le premier circuit de refroidissement ne soit notablement augmentée (ce qui serait le cas en cas de mélange).

Selon une caractéristique encore complémentaire conforme à la présente divulgation, la canalisation présente de préférence des ailettes.

Les ailettes permettent d'augmenter la surface d'échange thermique entre d'une part la canalisation et d'autre part l'air du premier circuit de refroidissement et/ou l'air du deuxième circuit de refroidissement.

Selon une autre caractéristique complémentaire ou alternative conforme à la présente divulgation, la canalisation présente de préférence en saillie des protubérances destinées à créer des turbulences d'écoulement.

Ainsi, l'échange thermique est augmenté entre d'une part la canalisation et d'autre part l'air du premier circuit de refroidissement et/ou l'air du deuxième circuit de refroidissement.

Selon encore une caractéristique complémentaire ou alternative conforme à la présente divulgation, le stator inter-turbine comprend de préférence une pluralité de canalisations s'étendant dans l'espace interne et faisant office d'échangeur de chaleur.

L'augmentation du nombre de canalisations augmente la surface d'échange thermique entre d'une part la canalisation et d'autre part l'air du premier circuit de refroidissement et/ou l'air du deuxième circuit de refroidissement.

Selon une caractéristique alternative, la pluralité de bras comprend des premiers bras et des deuxièmes bras, le premier circuit de refroidissement traverse les premiers bras, le deuxième circuit de refroidissement traverse les deuxièmes bras, et les premiers bras sont distincts des deuxièmes bras et disposés entre les deuxièmes bras.

Ainsi, le premier circuit de refroidissement et le deuxième circuit de refroidissement traversent tous les deux la veine annulaire primaire, sans interférer l'un avec l'autre.

Selon une autre caractéristique conforme à la présente divulgation, de préférence le premier circuit pressurise une chambre de lubrification de roulements servant à guider premier arbre de liaison et le deuxième arbre de liaison.

Ainsi, on réduit le risque de dégradation du lubrifiant (huile) des roulements se dégrade par cokéfaction, lorsque la pression en aval (à l'extérieur) de la première sortie de refroidissement est supérieure à la pression à l'intérieur du circuit de refroidissement.

Dans divers modes de réalisation de la turbomachine selon la divulgation, on peut éventuellement avoir recours en outre à l'une et/ou à l'autre des dispositions suivantes :
la roue est entrainée en rotation par le premier arbre de liaison ;
le compresseur constitue un compresseur haute pression, la turbomachine comprend en outre un compresseur basse pression et la première entrée de refroidissement est située entre le compresseur basse pression et le compresseur haute pression ;
le compresseur basse pression est entrainé en rotation par le premier arbre de liaison.

### Brève description des figures

D'autres caractéristiques et avantages de la présente divulgation apparaîtront dans la description détaillée suivante, se référant aux dessins annexés dans lesquels :
Fig. 1 représente schématiquement une turbomachine selon un exemple de réalisation,
Fig. 2 représente schématiquement à échelle agrandie la partie repérée II sur la figure 1,
Fig. 3 représente partiellement un stator, en perspective à échelle encore agrandie dans la zone repérée III sur la figure 2,
Fig. 4 est une vue selon la flèche repérée IV sur la figure 3,
Fig. 5 est vue conformément à la figure 4 d'une variante de réalisation de stator,
Fig. 6 représente schématiquement une autre variante de stator suivant la flèche repérée VI sur la figure 2,
Fig. 7 est une vue partielle de l'autre variante de stator suivant la flèche repérée VII sur la figure 6,
Fig. 8 est une vue partielle de l'autre variante de stator suivant la flèche repérée VIII sur la figure 6,
Fig. 9 est représentation conformément à la figure 2 d'une variante de réalisation de turbomachine.

### Description détaillée de la divulgation

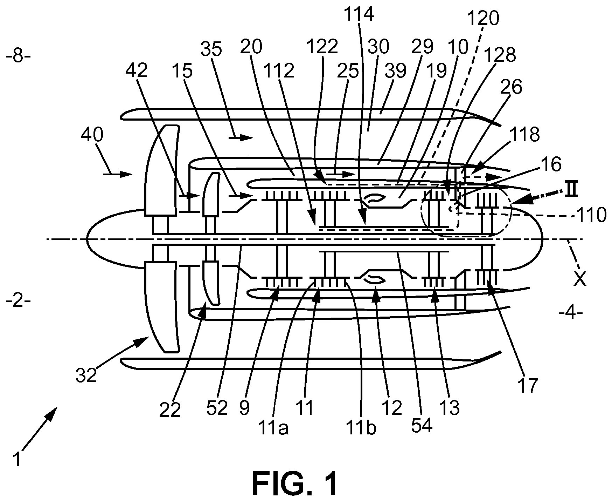

La figure 1 illustre une turbomachine 1 destinée à être montée sur un aéronef pour propulser un flux d'air d'entrée 40 d'un côté amont 2 vers un côté aval 4 et faire ainsi avancer l'aéronef dans une atmosphère 8 constituée par l'air environnant. L'aéronef peut être de type militaire ou civil.

La turbomachine 1 présente un axe longitudinal X. Le flux d'air d'entrée 40 s'écoule globalement du côté amont 2 vers le côté aval 4 suivant la direction de l'axe longitudinal X.

La turbomachine 1 comprend essentiellement une première roue 22, une deuxième roue 32, un compresseur basse pression 9, un compresseur haute pression 11, une chambre de combustion 12, une première turbine 13 (turbine haute pression), un stator inter-turbine 16, une deuxième turbine 17 (turbine basse pression), un stator secondaire 26, un premier arbre de liaison 52 et un deuxième arbre de liaison 54. La turbomachine 1 comprend en outre une première paroi annulaire 19, une deuxième paroi annulaire 29, ainsi qu'un carénage 39. Dans l'exemple de réalisation illustré, le flux d'air d'entrée 40 s'écoule à l'intérieur du carénage 39.

Après avoir traversé la deuxième roue 32, le flux d'air d'entrée 40 se sépare ensuite entre un flux tertiaire 35 et un flux d'air intermédiaire 42. Le flux tertiaire 35 s'écoule dans une veine annulaire tertiaire 30 s'étendant autour de la deuxième paroi annulaire 29. Dans l'exemple de réalisation illustré, le flux tertiaire 35 s'écoule plus précisément entre la deuxième paroi annulaire 29 et le carénage 39.

Le flux secondaire 25 et le flux tertiaire 35 sont des flux froids dans la mesure où ils ne s'étendent pas en aval de la chambre de combustion 12.

En variante, la turbomachine pourrait être dépourvue de la deuxième roue 32, du carénage 39 et par conséquent de la veine annulaire tertiaire, de sorte que le flux d'air entrant dans la turbomachine serait constitué par le flux intermédiaire 42. En outre, la deuxième paroi annulaire 29 pourrait alors être omise, ainsi que le stator secondaire 26.

Le flux d'air intermédiaire 42 traverse la première roue 32, puis le flux d'air intermédiaire 42 se sépare ensuite entre un flux secondaire 25 et un flux primaire 15. Le flux secondaire 25 s'écoule dans une veine annulaire secondaire 20 s'étendant entre la première paroi annulaire 19 et la deuxième paroi annulaire 29.

La veine annulaire secondaire 20 dans laquelle s'écoule le flux secondaire 25 et la veine annulaire tertiaire 30 dans laquelle s'écoule le flux tertiaire 35 sont des canaux flux froid.

Le flux primaire 15 s'écoule dans une veine annulaire primaire 10 à l'intérieur de la première paroi annulaire 19 et traverse le compresseur basse pression 9, puis le compresseur haute pression 11. Le compresseur basse pression 9 est optionnel. Le compresseur haute pression 11 comprend avantageusement plusieurs étages successifs dont un étage d'entrée 11a et un étage de sortie 11b.

Après avoir traversé le compresseur haute pression 11 le flux primaire 15 s'écoulant dans la veine annulaire primaire 10 pénètre dans la chambre de combustion 12. Dans la chambre de combustion 12, un carburant est brulé.

Puis, le flux primaire 15 traverse la première turbine 13, le stator inter-turbine 16 et la deuxième turbine 17. La première turbine 13 comporte un premier rotor de turbine 14 qui est relié au deuxième arbre de liaison 54 et entraine en rotation le deuxième arbre de liaison 54 autour de l'axe longitudinal X. Le premier rotor de turbine 14 comprend un premier disque portant de premières aubes disposées dans la veine annulaire primaire 10. L'axe longitudinal X constitue l'axe de rotation du deuxième arbre de liaison 54. La première turbine 13 peut comprendre un ou plusieurs étages.

Après avoir traversé la première turbine 13, plus précisément les aubes de la première turbine 13 et entrainant ainsi en rotation le premier rotor de turbine 14, le flux primaire 15 s'écoulant dans la veine annulaire primaire 10 traverse le stator inter-turbine 16 et la deuxième turbine 17. La deuxième turbine 17 traversée par le flux primaire 15 comprend un deuxième rotor de turbine 18. La deuxième turbine 17 peut comprendre un ou plusieurs étages.

Le deuxième rotor de turbine 18 est relié au premier arbre de liaison 52 et entraine en rotation le premier arbre de liaison 52 autour de l'axe longitudinal X. L'axe longitudinal X constitue l'axe de rotation du premier arbre de liaison 52. Le premier arbre de liaison 52 est relié à la première roue 22 qu'il entraine en rotation autour de l'axe longitudinal X. Dans l'exemple de réalisation illustré, le premier arbre de liaison 52 entraine également le compresseur basse pression 9 et la deuxième roue 32. Le compresseur basse pression 9, la première roue 22 et la deuxième roue 32 constituent un ensemble basse pression entrainé en rotation par le premier arbre de liaison 52. En variante, la première roue 22 pourrait être entrainée différemment. En outre, un réducteur pourrait être prévu pour réduire la vitesse d'entrainement de la première 22 et/ou de la deuxième roue 32.

Le premier rotor de turbine 14 est relié au deuxième arbre de liaison 54 et entraine en rotation le deuxième arbre de liaison 54 autour de l'axe longitudinal X. L'axe longitudinal X constitue l'axe de rotation du deuxième arbre de liaison 54. Le deuxième arbre de liaison 54 est relié au compresseur haute pression 11 qu'il entraine en rotation autour de l'axe longitudinal X.

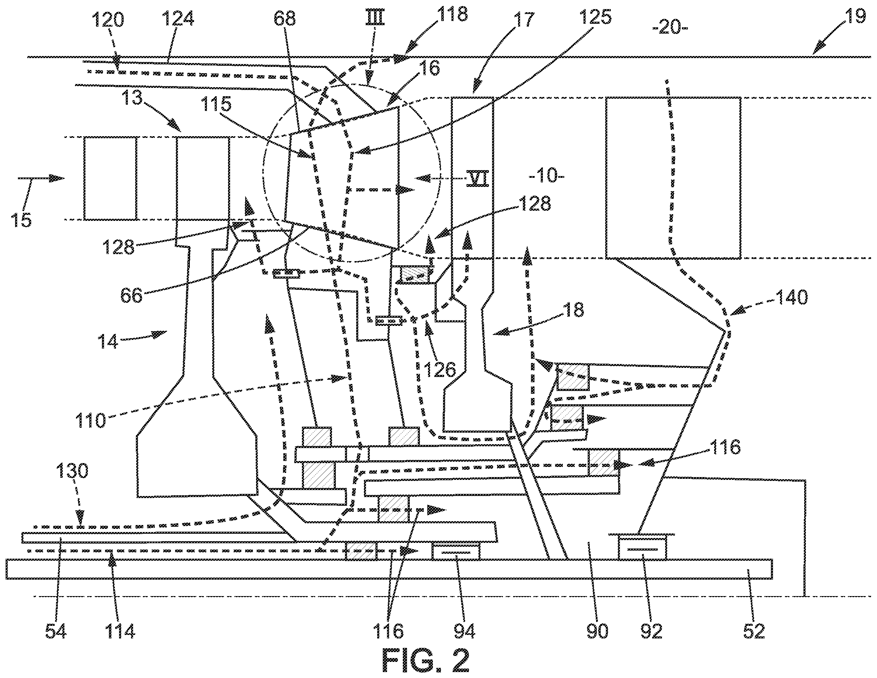

Tel qu'illustré aux figures 1 et 2, la turbomachine 1 comprend en outre essentiellement un premier circuit de refroidissement 110 et un deuxième circuit de refroidissement 120. Tel qu'illustré à la figure 2, la turbomachine 1 comprend en outre un troisième circuit de refroidissement 130 et un quatrième circuit de refroidissement 140.

Le premier circuit de refroidissement 110 comprend successivement une première entrée de refroidissement 112, un espace de refroidissement d'arbre 114, un premier passage 115 et une première sortie de refroidissement 118.

La première entrée de refroidissement 112 est située entre la première roue 22 et le compresseur haute pression 11. Plus précisément, la première entrée de refroidissement 112 est située entre le compresseur basse pression 9 et le compresseur haute pression 11. L'espace de refroidissement d'arbre 114 s'étend entre le premier arbre de liaison 52 et le deuxième arbre de liaison 54. Le premier passage 115 s'étend à travers la veine annulaire primaire 10, plus précisément dans le stator inter-turbine 16. La première sortie de refroidissement 118 est disposée dans la veine annulaire secondaire 20.

En variante, la première sortie de refroidissement 118 pourrait être disposée dans la veine annulaire tertiaire 30, après avoir traversé la veine annulaire primaire 10, de manière analogue, le premier circuit de refroidissement 110 traverserait la veine annulaire secondaire en passant à travers le stator secondaire 26 pouvant être structurellement analogue au stator inter-turbine 16.

Le premier circuit de refroidissement 110 comprend en outre un premier espace de refroidissement annexe 116 situé entre le premier espace de refroidissement 114 et le premier passage 115. Dans l'exemple de réalisation illustré, le premier circuit de refroidissement 110 plus précisément plusieurs espaces de refroidissement annexes 116 dans lesquels le premier circuit de refroidissement 110 pressurise une chambre de lubrification 90, afin de refroidir la chambre de lubrification 90 et maintenir le lubrifiant qu'elle contient dans la chambre de lubrification 90. Un premier roulement 92 et un deuxième roulement 94 sont disposés dans la chambre de lubrification 90. Le premier roulement 92 est monté sur le premier arbre de liaison 52 et maintien le premier arbre de liaison 52 par rapport au stator inter-arbre 16. Le deuxième roulement 92 est monté sur le deuxième arbre de liaison 54 et maintien le deuxième arbre de liaison 54 par rapport au stator inter-arbre 16.

Le deuxième circuit de refroidissement 120 comprend successivement une deuxième entrée de refroidissement 122, un espace intermédiaire 124, un deuxième passage 125 et une deuxième sortie de refroidissement 128.

La deuxième entrée de refroidissement 122 est disposée en aval par rapport à la première entrée de refroidissement 112. La deuxième entrée de refroidissement 122 est disposée en aval de l'étage d'entrée 11a du compresseur haute pression 11. De préférence, la deuxième entrée de refroidissement 122 est disposée en amont de l'étage de sortie 11b du compresseur haute pression 11. Dans l'exemple de réalisation illustré, l'espace intermédiaire 124 s'étend dans la deuxième paroi annulaire 29. En variante, l'espace intermédiaire 124 pourrait notamment faire saillie dans la veine annulaire secondaire 20. La deuxième sortie de refroidissement 128 s'étend dans la veine annulaire primaire 10. Le deuxième circuit de refroidissement 120 comprend en outre un deuxième espace de refroidissement 126 disposé entre le deuxième passage 125 et la deuxième sortie de refroidissement 128. Dans le deuxième espace de refroidissement 126, l'air circulant dans le deuxième circuit de refroidissement 120 vient au contact du deuxième rotor de turbine 18 pour le refroidir, en particulier le disque et les aubes du deuxième rotor de turbine 18. Au niveau de la deuxième sortie de refroidissement 128, le deuxième circuit de refroidissement a une fonction dite de purge, en créant une circulation vers la veine annulaire primaire, le deuxième circuit évite que de l'air chaud provenant de la veine annulaire primaire 10 s'introduise dans des cavités situées autour de la veine annulaire primaire 10.

En outre, le deuxième circuit de refroidissement 120 refroidit optionnellement le premier rotor de turbine 14.

Le premier circuit de refroidissement 110 est distinct du deuxième circuit de refroidissement 120, autrement dit l'air circulant dans le premier circuit de refroidissement 110 entre la première entrée de refroidissement 112 et la première sortie de refroidissement 118 ne se mélange pas à l'air circulant dans le deuxième circuit de refroidissement 120 entre la deuxième entrée de refroidissement 122 et la deuxième sortie de refroidissement 128, et réciproquement.

Le stator inter-turbine 16 comprend une paroi interne 66, une paroi externe 68 et des bras 60. La paroi interne 66 et la paroi externe 68 sont sensiblement conique et délimitent entre elles, radialement à l'axe de rotation X, la veine annulaire primaire 10 au niveau du stator inter-turbine 16. Les bras 60 s'étendent radialement à l'axe de rotation X entre une extrémité interne 60a et une extrémité externe 60b. L'extrémité interne 60a des bras 60 se situe au niveau de la paroi interne 66. L'extrémité externe 60b des bras 60 se situe au niveau de la paroi externe 68.

Les bras 60 sont creux et comprennent une enveloppe 69 délimitant un espace interne 61. L'enveloppe 69 s'étend de l'extrémité interne 60a à l'extrémité externe 60b. La paroi interne 66 présente une ouverture en regard de l'espace interne 61, de sorte qu'à l'extrémité interne 60a l'enveloppe 69 correspond à l'ouverture de la paroi interne 66. De manière analogue, la paroi externe 68 présente une ouverture en regard de l'espace interne 61, de sorte qu'à l'extrémité externe 60b l'enveloppe 69 correspond à l'ouverture de la paroi externe 68.

Les bras 60 sont angulairement répartis, par exemple huit bras espacés les uns des autres de 45 degrés.

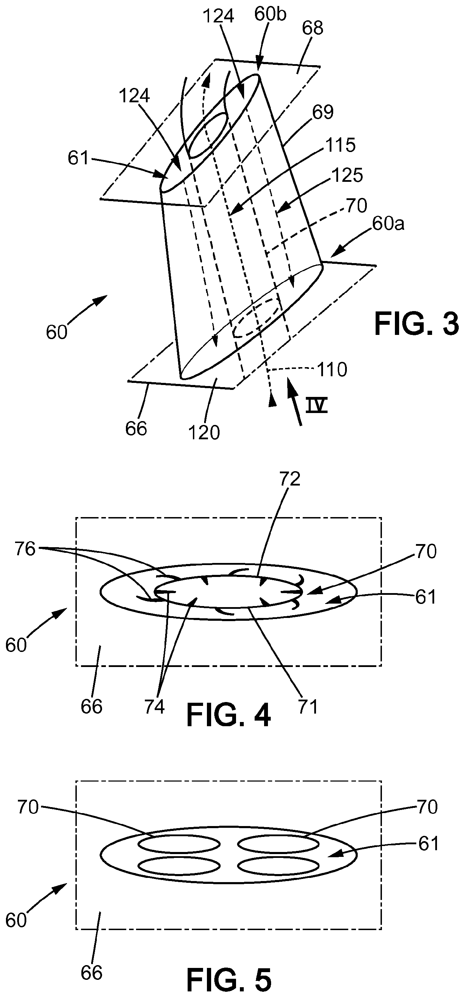

Dans l'exemple de réalisation illustré aux figures 3 à 5, chaque bras 60 du stator inter-turbine 16 comprend en outre une canalisation 70 s'étendant dans l'espace interne 61 entre l'extrémité interne 60a et l'extrémité externe 60b, à l'écart de l'enveloppe 69 et de préférence sensiblement au centre de l'espace interne 61.

La canalisation 70 présente une surface interne 71 et une surface externe 72. Le premier circuit de refroidissement 110 passe dans la canalisation 70, au contact de la surface interne 71. Le deuxième circuit de refroidissement 120 passe dans l'espace interne 61, entre l'enveloppe 69 et la canalisation 70, au contact de la surface externe 72 de la canalisation 70.

La canalisation 70 présente des ailettes 74 de refroidissement faisant saillie de la surface interne 71 et s'étendant radialement à l'axe de rotation X. La canalisation 70 présente en outre des protubérances 76 faisant saillie de la surface externe 72, afin de créer un écoulement turbulent favorable à l'échange thermique entre la canalisation 70 et l'air du deuxième circuit de refroidissement 120.

En variante, les ailettes 74 pourraient faire saillie de la surface externe 72 et ou les protubérances 76 pourraient faire saillie de la surface interne 72.

Selon une autre variante, le stator inter-turbine 16 pourrait être dépourvu de la canalisation, le premier passage 115 s'étendrait dans l'espace interne 61, le deuxième passage 125 s'étendrait autour de l'enveloppe 69, mais à l'intérieur d'un habillage, de sorte que par rapport à la description supra l'enveloppe 69 jouerait le rôle de la canalisation 70 et l'habillage jouerait le rôle de l'enveloppe 69.

Dans la variante de réalisation illustrée à la figure 5, chaque bras 60 du stator inter-turbine 16 comprend en outre une pluralité de canalisations 70, plus précisément quatre canalisations 70 s'étendant parallèlement dans l'espace interne 61.

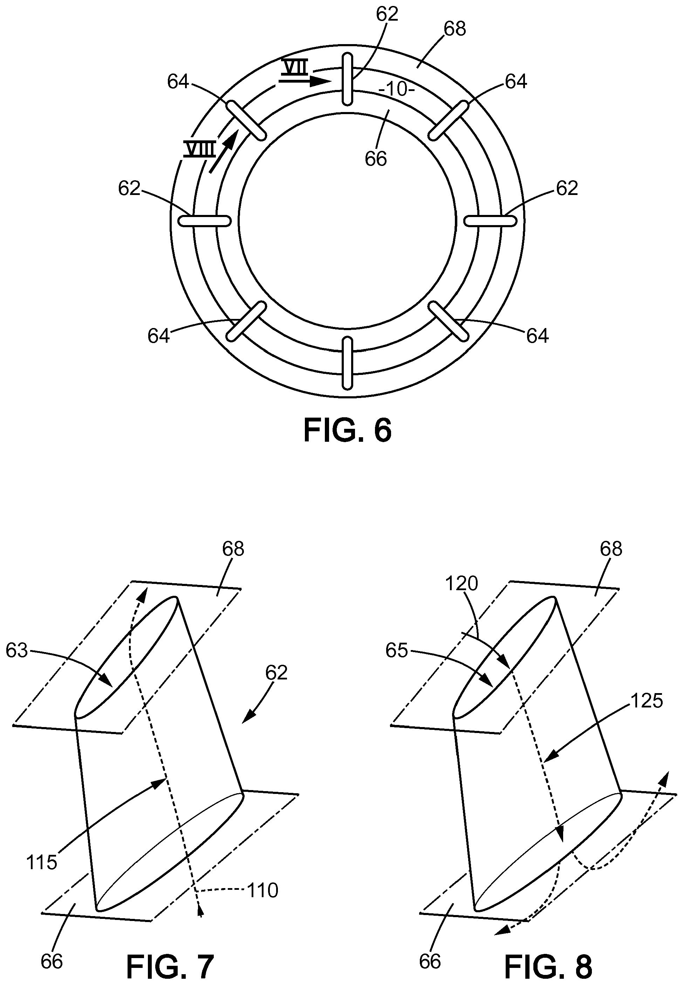

Dans l'autre variante de réalisation illustrée aux figures 6 à 8, les bras du stator inter-turbine 16 comprennent des premiers bras 62 présentant chacun un premier espace interne 63 et des deuxièmes bras 64 présentant chacun un deuxième espace interne 65. Le stator inter-turbine 16 comprend quatre premiers bras 62 écartés angulairement de 90 degrés et quatre deuxième bras 64 écartés angulairement de 90 degrés. Tel qu'illustré à la figure 6, les premiers bras 62 et les deuxième bras 64 sont alternativement disposés, chaque premier bras 62 étant disposés entre deux deuxième bras 64 et équidistant de ces deuxièmes bras, et réciproquement. Le premier passage 115 s'étend dans les premiers espaces internes 63 et le deuxième passage 125 s'étend dans les deuxièmes espaces internes 65.

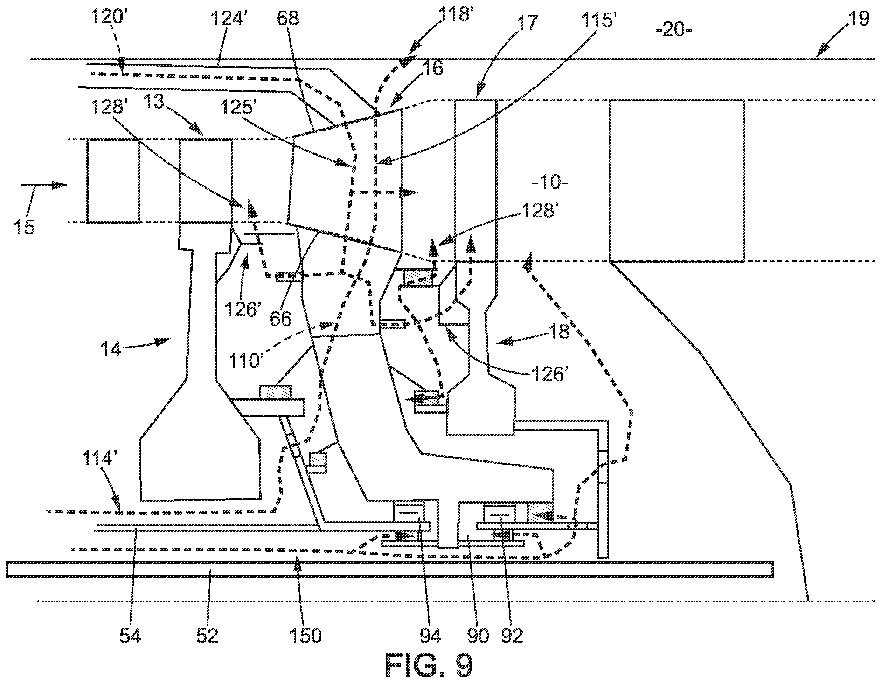

Dans la variante de réalisation illustrée à la figure 9 la turbomachine comprend un premier circuit de refroidissement 110', un deuxième circuit de refroidissement et un circuit de refroidissement annexe 150. Le premier circuit de refroidissement 110' comprend successivement une première entrée de refroidissement, un espace de refroidissement d'arbre 114', un premier passage 115' et une première sortie de refroidissement 118'. Le deuxième circuit de refroidissement 120' comprend successivement une deuxième entrée de refroidissement 122, un espace intermédiaire 124', un deuxième passage 125', un deuxième espace de refroidissement 126' et une deuxième sortie de refroidissement 128'. La variante de réalisation illustrée à la figure 9 se distingue de l'exemple de réalisation illustré à la figure 2 en ce que l'espace de refroidissement d'arbre 114' ne s'étend par entre le premier arbre de liaison 52 et le deuxième arbre de liaison 54, mais autour du deuxième arbre de liaison 54, plus précisément entre le disque du deuxième rotor de turbine 18 et le deuxième arbre de liaison 54, de sorte que le premier circuit de refroidissement 110' refroidit le deuxième arbre de liaison 54 et le deuxième rotor de turbine 18.

Bien entendu la divulgation n'est nullement limitée aux exemples de réalisation décrits à titre illustratif, non limitatif. Ainsi, les exemples de réalisation illustrés représentent une turbomachine à trois flux. Bien entendu, la divulgation s'applique également à une turbomachine à deux flux. Dans un tel cas, la turbomachine est dépourvue de la veine annulaire tertiaire 30, de la deuxième roue 32, du flux tertiaire 35 et du carénage 39.

## Revendications

1. Turbomachine (1) pour aéronef, la turbomachine étant destinée à propulser, vers un côté aval (4), un flux d'air entrant d'un côté amont (2), ladite turbomachine présentant une veine annulaire primaire (10) et un canal flux froid (20, 30) s'étendant autour de la veine annulaire primaire (10), ladite turbomachine comprenant :
une roue (22, 32) agencée en amont d'une première paroi annulaire (19), la première paroi annulaire (19) séparant la veine annulaire primaire (10) du canal flux froid (20, 30),
dans la veine annulaire primaire (10), d'amont en aval un compresseur (11), une chambre de combustion (12), une première turbine (13) et une deuxième turbine (17), le compresseur (11) présentant un étage d'entrée (11a) et un étage de sortie (11b), la première turbine (13) comportant un premier rotor de turbine (14) et la deuxième turbine (17) comportant un deuxième rotor de turbine (18),
un ensemble d'arbre destiné à entrainer en rotation le compresseur (11) et la roue (22, 32) autour d'un axe de rotation (X), l'ensemble d'arbre comprenant un premier arbre de liaison (52) et un deuxième arbre de liaison (54), le premier arbre de liaison (52) étant lié en rotation au deuxième rotor de turbine (18), le deuxième arbre de liaison (54) étant lié en rotation au premier rotor de turbine (14) et entrainant en rotation le compresseur (11),
un stator inter-turbine (16) disposé entre la première turbine (13) et la deuxième turbine (17), le stator inter-turbine (16) comprenant une pluralité de bras (60, 62, 64) s'étendant entre une extrémité interne (60a, 62a, 64a) et une extrémité externe (60b, 62b, 64b), la pluralité de bras (60, 62, 64) traversant la veine annulaire primaire (10),
un ensemble de refroidissement comprenant un premier circuit de refroidissement (110) présentant successivement :
une première entrée de refroidissement (112) située entre la roue (22, 32) et le compresseur (11),
un premier passage (115) s'étendant à travers la veine annulaire primaire (10), dans le stator inter-turbine (16), de l'extrémité interne (60a, 62a, 64a) vers l'extrémité externe (60b, 62b, 64b), et
une première sortie de refroidissement (118) s'étendant dans le canal flux froid (20, 30).

2. Turbomachine selon la revendication 1 dans laquelle l'ensemble de refroidissement comporte en outre un deuxième circuit de refroidissement (120), le premier circuit de refroidissement (110) et le deuxième circuit de refroidissement (120) sont distincts, le premier circuit de refroidissement (110) étant fluidiquement étanche par rapport au deuxième circuit de refroidissement (120), le deuxième circuit de refroidissement (120) comprend successivement :
une deuxième entrée de refroidissement (122) située en aval de l'étage d'entrée (11a) du compresseur (11),
un deuxième passage (125) s'étendant à travers la veine annulaire primaire (10), dans le stator inter-turbine (16), de l'extrémité externe (60b, 62b, 64b) vers l'extrémité interne (60a, 62a, 64a),
une deuxième sortie de refroidissement (128) s'étendant dans la veine annulaire primaire (10), en aval de la première turbine (13).

3. Turbomachine selon la revendication précédente dans laquelle :
chaque bras (60, 62, 64) présente un espace interne (61, 63, 65),
le stator inter-turbine (16) comprend une canalisation (70) s'étendant dans l'espace interne (61), et
l'un parmi le premier circuit (110) et le deuxième circuit (120) s'étend à l'intérieur de la canalisation (70), l'autre parmi le premier circuit (110) et le deuxième circuit (120) s'étend à l'extérieur de la canalisation (70) et au contact de la canalisation (70), de sorte que la canalisation (70) fait office d'échangeur de chaleur.

4. Turbomachine selon la revendication précédente dans laquelle la canalisation (70) présente des ailettes (74).

5. Turbomachine selon l'une quelconque parmi la revendication 3 et la revendication 4 dans laquelle la canalisation présente en saillie des protubérances (76) destinées à créer des turbulences d'écoulement.

6. Turbomachine selon l'une quelconque des revendications 3 à 5 dans laquelle le stator inter-turbine (16) comprend une pluralité de canalisations (70) s'étendant dans l'espace interne (61) et faisant office d'échangeur de chaleur.

7. Turbomachine selon la revendication 2 dans laquelle :
la pluralité de bras comprend des premiers bras (62) et des deuxièmes bras (64),
le premier circuit de refroidissement (110) traverse les premiers bras (62),
le deuxième circuit de refroidissement (120) traverse les deuxièmes bras (64), et
les premiers bras (62) sont distincts des deuxièmes bras (64) et disposés entre les deuxièmes bras (64).

8. Turbomachine selon l'une quelconque des revendications 2 à 7 dans lequel le deuxième circuit de refroidissement (120) comprend un deuxième espace de refroidissement (126) s'étendant au contact du deuxième rotor de turbine (18) pour le refroidir.

9. Turbomachine selon l'une quelconque des revendications précédentes dans laquelle le premier circuit comprend, entre la première entrée de refroidissement (112) et le premier passage (115), un premier espace de refroidissement (114) s'étendant au contact du deuxième arbre de liaison (54).

10. Turbomachine selon la revendication précédente dans laquelle l'espace de refroidissement (114) s'étend entre le premier arbre de liaison (52) et le deuxième arbre de liaison (54).

11. Turbomachine selon l'une quelconque des revendications précédentes dans laquelle le premier circuit (110) pressurise une chambre de lubrification de roulements servant à guider le premier arbre de liaison et le deuxième arbre de liaison.

12. Turbomachine selon l'une quelconque des revendications précédentes dans laquelle la roue (22, 32) est entrainée en rotation par le premier arbre de liaison (52).

13. Turbomachine selon l'une quelconque des revendications précédentes dans laquelle :
le compresseur (11) constitue un compresseur haute pression,
la turbomachine comprend en outre un compresseur basse pression (9), et
la première entrée de refroidissement (112) est située entre le compresseur basse pression (9) et le compresseur haute pression (11).

14. Turbomachine selon la revendication précédente dans laquelle le compresseur basse pression (9) est entrainé en rotation par le premier arbre de liaison (52).

## Patentansprüche

1. Turbotriebwerk (1) für Luftfahrzeuge, wobei das Turbotriebwerk dazu bestimmt ist, einen von einer stromaufwärtigen Seite (2) einströmenden Luftstrom zu einer stromabwärtigen Seite (4) zu treiben, wobei das Turbotriebwerk einen ringförmigen Primärluftkanal (10) und einen Kaltstromkanal (20, 30) aufweist, der sich um den ringförmigen Primärluftkanal (10) herum erstreckt, wobei das Turbotriebwerk umfasst:
ein Laufrad (22, 32), das stromaufwärts einer ersten Ringwand (19) angeordnet ist, wobei die erste Ringwand (19) den ringförmigen Primärluftkanal (10) vom Kaltstromkanal (20, 30) trennt,
im ringförmigen Primärluftkanal (10), von stromaufwärts in Richtung stromabwärts, einen Verdichter (11), eine Brennkammer (12), eine erste Turbine (13) und eine zweite Turbine (17), wobei der Verdichter (11) eine Eingangsstufe (11a) und eine Ausgangsstufe (11b) aufweist, wobei die erste Turbine (13) einen ersten Turbinen-Rotor (14) und die zweite Turbine (17) einen zweiten Turbinen-Rotor (18) umfasst,
eine Wellenanordnung zum Antreiben des Verdichters (11) und des Laufrads (22, 32) in Drehung um eine Drehachse (X), wobei die Wellenanordnung eine erste Verbindungswelle (52) und eine zweite Verbindungswelle (54) umfasst, wobei die erste Verbindungswelle (52) drehfest mit dem zweiten Turbinen-Rotor (18) verbunden ist, wobei die zweite Verbindungswelle (54) drehfest mit dem ersten Turbinen-Rotor (14) verbunden ist und den Verdichter (11) in Drehung versetzt,
einen zwischen der ersten Turbine (13) und der zweiten Turbine (17) angeordneten Zwischen-Turbinen-Stator (16), wobei der Zwischen-Turbinen-Stator (16) mehrere Arme (60, 62, 64) umfasst, die sich zwischen einem inneren Ende (60a, 62b, 62b) und einem äußeren Ende (60b, 62b, 64b) erstrecken, wobei sich die mehreren Arme (60, 62, 64) durch den ringförmigen Primärluftkanal (10) hindurch erstrecken,
eine Kühlanordnung mit einem ersten Kühlstrang (110), der nacheinander aufweist:
einen ersten Kühleinlass (112), der sich zwischen dem Laufrad (22, 32) und dem Verdichter (11) befindet,
einen ersten Durchgang (115), der sich durch den ringförmigen Primärluftkanal (10) im Zwischen-Turbinen-Stator (16) vom inneren Ende (60a, 62b, 62b) zum äußeren Ende (60b, 62b, 64b) erstreckt, und einen ersten Kühlauslass (118), der sich im Kaltstromkanal (20, 30) erstreckt.

2. Turbotriebwerk nach Anspruch 1,
wobei die Kühlanordnung ferner einen zweiten Kühlstrang (120) umfasst, wobei der erste Kühlstrang (110) und der zweite Kühlstrang (120) separat vorliegen, wobei der erste Kühlstrang (110) gegenüber dem zweiten Kühlstrang (120) strömungstechnisch abgedichtet ist, wobei der zweite Kühlstrang (120) nacheinander umfasst:
einen zweiten Kühleinlass (122), der stromabwärts der Eingangsstufe (11a) des Verdichters (11) angeordnet ist,
einen zweiten Durchgang (125), der sich durch den ringförmigen Primärluftkanal (10) im Zwischen-Turbinen-Stator (16) vom äußeren Ende (60b, 62b, 64b) zum inneren Ende (60a, 62b, 62b) erstreckt,
einen zweiten Kühlauslass (128), der sich im ringförmigen Primärluftkanal (10) stromabwärts der ersten Turbine (13) erstreckt.

3. Turbotriebwerk nach dem vorhergehenden Anspruch,
wobei jeder Arm (60, 62, 64) einen Innenraum (61, 63, 65) aufweist, der Zwischen-Turbinen-Stator (16) eine Rohrleitung (70) umfasst, die sich im Innenraum (61) erstreckt, und
einer aus erstem Strang (110) und zweitem Strang (120) sich innerhalb der Rohrleitung (70) erstreckt, wobei sich der andere aus erstem Strang (110) und zweitem (120) Strang außerhalb der Rohrleitung (70) und in Kontakt mit der Rohrleitung (70) erstreckt, so dass die Rohrleitung (70) als Wärmetauscher fungiert.

4. Turbotriebwerk nach dem vorhergehenden Anspruch,
wobei die Rohrleitung (70) Rippen (74) aufweist.

5. Turbotriebwerk nach einem der Ansprüche 3 und 4,
wobei die Rohrleitung abstehende Vorsprünge (76) aufweist, die dazu bestimmt sind, Strömungsturbulenzen zu erzeugen.

6. Turbotriebwerk nach einem der Ansprüche 3 bis 5,
wobei der Zwischen-Turbinen-Stator (16) mehrere Rohrleitungen (70) umfasst, die sich im Innenraum (61) erstrecken und als Wärmetauscher fungieren.

7. Turbotriebwerk nach Anspruch 2,
wobei die mehreren Arme erste Arme (62) und zweite Arme (64) umfassen,
wobei der erste Kühlstrang (110) sich durch die ersten Arme (62) hindurch erstreckt,
wobei der zweite Kühlstrang (120) sich durch die zweiten Arme (64) hindurch erstreckt und
wobei die ersten Arme (62) separat von den zweiten Armen (64) vorliegen und zwischen den zweiten Armen (64) angeordnet sind.

8. Turbotriebwerk nach einem der Ansprüche 2 bis 7,
wobei der zweite Kühlstrang (120) einen zweiten Kühlraum (126) umfasst, der sich in Kontakt mit dem zweiten Turbinen-Rotor (18) erstreckt, um diesen zu kühlen.

9. Turbotriebwerk nach einem der vorhergehenden Ansprüche,
wobei der erste Strang zwischen dem ersten Kühleinlass (112) und dem ersten Durchgang (115) einen ersten Kühlraum (114) umfasst, der sich in Kontakt mit der zweiten Verbindungswelle (54) erstreckt.

10. Turbotriebwerk nach dem vorhergehenden Anspruch,
wobei sich der Kühlraum (114) zwischen der ersten Verbindungswelle (52) und der zweiten Verbindungswelle (54) erstreckt.

11. Turbotriebwerk nach einem der vorhergehenden Ansprüche,
wobei der erste Strang (110) eine Lagerschmierkammer mit Druck beaufschlagt, die zur Führung der ersten Verbindungswelle und der zweiten Verbindungswelle dient.

12. Turbotriebwerk nach einem der vorhergehenden Ansprüche,
wobei das Laufrad (22, 32) über die erste Verbindungswelle (52) in Drehung versetzt wird.

13. Turbotriebwerk nach einem der vorhergehenden Ansprüche,
wobei der Verdichter (11) einen Hochdruckverdichter bildet,
wobei das Turbotriebwerk ferner einen Niederdruckverdichter (9) umfasst und
wobei der erste Kühleinlass (112) zwischen dem Niederdruckverdichter (9) und dem Hochdruckverdichter (11) angeordnet ist.

14. Turbotriebwerk nach dem vorhergehenden Anspruch,
wobei der Niederdruckverdichter (9) über die erste Verbindungswelle (52) in Drehung versetzt wird.

## Claims

1. A turbomachine (1) for aircraft, the turbomachine being intended to propel, towards a downstream side (4), a flow of air entering from an upstream side (2), said turbomachine having a primary annular flow path (10) and a cold flow channel (20, 30) extending around the primary annular flow path (10), said turbomachine comprising:
an impeller (22, 32) arranged upstream of a first annular wall (19), the first annular wall (19) separating the primary annular flow path (10) from the cold flow channel (20, 30),
in the primary annular flow path (10), from upstream to downstream, a compressor (11), a combustion chamber (12), a first turbine (13) and a second turbine (17), the compressor (11) having an input stage (11a) and an output stage (11b), the first turbine (13) having a first turbine rotor (14) and the second turbine (17) having a second turbine rotor (18),
a shaft assembly for rotating the compressor (11) and the impeller (22, 32) about an axis of rotation (X), the shaft assembly comprising a first connecting shaft (52) and a second connecting shaft (54), the first connecting shaft (52) being rotatably connected to the second turbine rotor (18), the second connecting shaft (54) being rotatably connected to the first turbine rotor (14) and rotating the compressor (11),
an inter-turbine stator (16) disposed between the first turbine (13) and the second turbine (17), the inter-turbine stator (16) comprising a plurality of arms (60, 62, 64) extending between an inner end (60a, 62a, 64a) and an outer end (60b, 62b, 64b), the plurality of arms (60, 62, 64) extending through the primary annular flow path (10),
a cooling assembly comprising a first cooling circuit (110) having successively:
a first cooling inlet (112) located between the impeller (22, 32) and the compressor (11),
a first passage (115) extending through the primary annular flow path (10) into the inter-turbine stator (16) from the inner end (60a, 62a, 64a) to the outer end (60b, 62b, 64b), and
a first cooling outlet (118) extending into the cold flow channel (20, 30).

2. A turbomachine according to claim 1 wherein the cooling assembly further comprises a second cooling circuit (120), the first cooling circuit (110) and the second cooling circuit (120) are separate, the first cooling circuit (110) being fluidly sealed with respect to the second cooling circuit (120), the second cooling circuit (120) comprises successively:
a second cooling inlet (122) located downstream of the inlet stage (11a) of the compressor (11),
a second passage (125) extending through the primary annular flow path (10) in the inter-turbine stator (16) from the outer end (60b, 62a, 64a) to the inner end (60a, 62b, 62b),
a second cooling outlet (128) extending into the primary annular flow path (10), downstream of the first turbine (13).

3. A turbomachine according to the preceding claim wherein:
each arm (60, 62, 64) has an internal space (61, 63, 65),
the inter-turbine stator (16) comprises a duct (70) extending into the internal space (61), and
one of the first circuit (110) and the second circuit (120) extends inside the duct (70), the other of the first circuit (110) and the second circuit (120) extends outside the duct (70) and in contact with the duct (70), so that the duct (70) acts as a heat exchanger.

4. A turbomachine according to the preceding claim wherein the duct (70) has fins (74).

5. A turbomachine according to any one of claim 3 and claim 4 wherein the duct has protrusions (76) for creating flow turbulence.

6. A turbomachine according to any one of claims 3 to 5 wherein the inter-turbine stator (16) comprises a plurality of ducts (70) extending into the internal space (61) and acting as a heat exchanger.

7. A turbomachine according to claim 2, wherein:
the plurality of arms comprises first arms (62) and second arms (64),
the first cooling circuit (110) passes through the first arms (62),
the second cooling circuit (120) passes through the second arms (64), and
the first arms (62) are separate from the second arms (64) and arranged between the second arms (64).

8. A turbomachine according to any one of claims 2 to 7 wherein the second cooling circuit (120) comprises a second cooling space (126) extending in contact with the second turbine rotor (18) to cool it.

9. A turbomachine according to any one of the preceding claims wherein the first circuit comprises, between the first cooling inlet (112) and the first passage (115), a first cooling space (114) extending in contact with the second connecting shaft (54).

10. A turbomachine according to the preceding claim wherein the cooling space (114) extends between the first connecting shaft (52) and the second connecting shaft (54).

11. A turbomachine according to any one of the preceding claims wherein the first circuit (110) pressurises a bearing lubrication chamber for guiding the first connecting shaft and the second connecting shaft.

12. A turbomachine according to any one of the preceding claims wherein the impeller (22, 32) is rotated by the first connecting shaft (52).

13. A turbomachine according to any one of the preceding claims wherein:
the compressor (11) is a high-pressure compressor,
the turbomachine further comprises a low-pressure compressor (9), and
the first cooling inlet (112) is located between the low-pressure compressor (9) and the high-pressure compressor (11).

14. A turbomachine according to the preceding claim wherein the low-pressure compressor (9) is rotated by the first connecting shaft (52).
